# EUROPÄISCHE PATENTSCHRIFT

(11) **EP 1 542 401 B1**
(45) Veröffentlichungstag und Bekanntmachung des Hinweises auf die Patenterteilung: **04.08.2010**
(21) Anmeldenummer: 04106390.0
(22) Anmeldetag: 08.12.2004
(51) Int. Cl.: H04L 12/28

(54) **Netzzugangsvorrichtung für funkbasierte drahlose lokale Netze**
Access point for wireless local area networks
Point d'acces pour des reseaux sans fil locals

(30) Priorität: 11.12.2003 EP 03405894
(43) Veröffentlichungstag der Anmeldung: 15.06.2005
(73) Patentinhaber: Swisscom AG, 3050 Bern (CH)
(72) Erfinder: Gilligmann, Benoît, 3074, Muri b. Bern (CH); Gysi, Martin, 4053, Basel (CH)
(74) Vertreter: Scheuzger, Beat Otto

(56) Entgegenhaltungen:
- WO-A-03/048957
- WO-A-03/093951
- DE-A1- 10 054 046
- US-B1- 6 400 722

## Beschreibung

Die vorliegende Erfindung betrifft eine Netzzugangsvorrichtung. Die Erfindung betrifft insbesondere eine Netzzugangsvorrichtung, welche einen Access Point mit durch eine Netzwerkidentifizierung identifizierbaren funkbasierten drahtlosen Lokalnetzen sowie mindestens eine Datenverbindung zwischen dem Access Point und weiteren Netzwerkgeräten oder Netzwerken umfasst.

Drahtlose Lokalnetze, so genannte Wireless Local Area Networks (WLAN), dienen Benutzern mit Kommunikationsendgeräten, insbesondere Benutzern mit mobilen Kommunikationsendgeräten, als Kommunikationssysteme für die Kommunikation mit anderen Kommunikationseinheiten. Die drahtlosen Lokalnetze werden vorwiegend als Zugangsnetze für den Zugang auf ein Festnetz verwendet, beispielsweise ein lokales Kommunikationsnetz (Local Area Network, LAN), das öffentliche geschaltete Telefonnetz (Public Switched Telephone Network, PSTN) oder insbesondere das Internet. In einem WLAN werden Daten jeweils über eine Luftschnittstelle übertragen. Ohne eine physische Verbindung zu verwenden, werden dabei Informationen mittels elektromagnetischer Wellen, insbesondere Funk- oder Infrarotwellen, von einem Punkt an einen anderen übermittelt. Ein typisches WLAN umfasst mindestens einen Zugangspunkt, einen so genannten Access Point, und mindestens ein Kommunikationsendgerät, beispielsweise einen Laptop- oder Palmtop Computer, beispielsweise ein so genannter Personal Data Assistant (PDA), oder ein Mobiltelefon, mit einer drahtlosen Schnittstelle. Ein Access Point umfasst mindestens einen Sender/Empfänger und eine Antenne für den Datenaustausch mit den drahtlosen Schnittstellen der Kommunikationsendgeräte über eine Luftschnittstelle. In einem WLAN können mehrere Access Points über Kommunikationskanäle miteinander verbunden sein. Ein oder mehrere Access Points eines WLANs können mit einem Festnetz verbunden sein, wobei der Zugang vom WLAN zum Festnetz typischerweise durch Zugangskontrollen geschützt ist, beispielsweise durch einen so genannten RADIUS-Server. Die zurzeit am weitesten verbreiteten WLANs sind in der Normenfamilie IEEE 802.11 definiert. Um insbesondere mobilen Benutzern möglichst unabhängig von ihrem Aufenthaltsort den drahtlosen Zugang zum Internet oder zu anderen Festnetzen zu ermöglichen, müssen sehr viele Access Points installiert, vernetzt, konfiguriert und gewartet werden. Die Bereitstellung und der Betrieb von Access Points sind für die Betreiber mit Kosten verbunden, welche mit der vermehrten Flächenabdeckung durch Access Points zunehmen. Andererseits stösst die Installation von Funksendeanlagen im öffentlichen Raum bei einigen Bevölkerungsgruppen vermehrt auf Widerstand.

In der Patentanmeldung US 2003/0115610 wird eine Netzzugangsvorrichtung beschrieben, in welcher ein Access Point für ein WLAN im privaten Heimbereich mit einem Modem für eine digitale Teilnehmerleitung (DSL, Digital Subscriber Line) kombiniert ist. Die Vorrichtung nach US 2003/0115610 ermöglicht einem Teilnehmer mit mehreren Endgeräten im privaten Heimbereich drahtlos auf einen Access Point zuzugreifen und über das mit dem Access Point verbundene Modem sowie die digitale Teilnehmerleitung auf das Internet zuzugreifen. Theoretisch könnte die Vorrichtung nach US 2003/0115610 auch für mobile Benutzer zugänglich gemacht werden, die sich im öffentlichen Raum in der geografischen Nähe des privaten Heimbereichs aufhalten. Die Vorrichtung nach US 2003/0115610 ist jedoch nur für ein einziges WLAN im Heimbereich des Teilnehmers ausgelegt, so dass für zusätzliche mobile Benutzer im öffentlichen Raum keine entsprechenden Zugangsbedingungen für den Zugriff über den privaten Access Point auf das Internet definiert und aufgesetzt werden können. Zudem wäre die Vorrichtung nach US 2003/0115610 auch nicht eingerichtet, die Dienstqualität des privaten Teilnehmers über seine Teilnehmerleitung vor der Beeinflussung und im Extremfall vor einer Überlastung durch Datenströme von mobilen Endgeräten fremder Benutzer im öffentlichen Raum zu schützen. Kurzum, die Netzzugangsvorrichtung gemäss US 2003/0115610 ist nicht geeignet um sowohl privaten Teilnehmern im Heimbereich als auch mobilen öffentlichen Benutzern im öffentlichen Raum den drahtlosen Zugang zu einem Festnetz, insbesondere zum Internet, zu ermöglichen.

In der internationalen Patentanmeldung WO 02/058336 ist ein System und ein Verfahren offenbart, um einen drahtlosen Zugang zu einer von mehreren Dienstanbietern gemeinsam genutzten Netzwerk-Infrastruktur zu gestatten. Das System, das auch mit dem Internet verbindbar ist, enthält eine Vielzahl von Access Points, die mit einem lokalen Netzwerk verbunden sind. Ein tragbarer Rechner eines Benutzers erhält Identifizierungs-Informationen für diese Access Points und speichert diese. Wenn ein Access Point die Identifizierungs-Information von einem Rechner erhält, kann die Netzwerkverbindung geschaltet werden. Damit wird die Möglichkeit geschaffen, dass mehrere Dienstanbieter dieselbe Netzwerk-Infrastruktur benutzen und teilen können. Mit der in WO 02/058336 beschriebenen Anordnung ist es jedoch nicht möglich Dienstqualitäten zuzuweisen, sodass es z.B. nicht möglich ist, dass der Besitzer eines Access Points gegenüber Dritten einen bevorzugten Zugang für die Benutzung dieses Access Points zugeteilt erhält.

Die veröffentlichte europäische Patentanmeldung EP 1 365 561 beschreibt ein Verfahren zur automatischen Konfiguration einer Netzwerkeinheit, wobei die Konfiguration der Netzwerkeinheit beilspielsweise über ein Bluetooth Netzwerk und der Betrieb der Netzwerkeinheit beispielsweise über ein WLAN Netzwerk gemäss dem IEEE 802.11 b Standard erfolgt. Mit der in EP 1 365 561 beschriebenen Anordnung ist es jedoch nicht möglich, verschiedene Benutzer eines WLAN Netzwerks zu unterscheiden.

In der Offenlegungsschrift DE 100 54 046 wird ein System beschrieben, um mobile Terminals im Nahbereich von Funkzugangspunkten von Privatpersonen mit dem Internet zu verbinden. Die Verbindung erfolgt aufgrund von Regeln. Die Daten der mobilen Terminals werden über IP-Tunnel zu einem Rechner am Internet geführt. Der Eigentümer duldet dabei die Nutzung seiner Betriebsmittel.

In der Publikation WO 03/093951 werden Zugangspunkte von einer Zentrale gesteuert. Steuerpakete, welche von Zugangspunkten empfangen werden, können an die Zentrale übermittelt werden und die Zentrale kann durch die Übermittlung einer entsprechenden Meldung den Zugangspunkt für den Zugang über eine drahtlose Verbindung freischalten oder sperren.

Es ist eine Aufgabe der vorliegenden Erfindung, eine neue Netzzugangsvorrichtung vorzuschlagen, welche einen Access Point mit durch eine Netzwerkidentifizierung identifizierbaren funkbasierten drahtlosen Lokalnetzen, mit mindestens einer Datenverbindung zwischen dem Access Point und weiteren Netzwerkgeräten oder Netzwerken sowie mit einem Verbindungs-Kontrollmodul zur Konfiguration einer Tunnel-Verbindung über die mindestens eine Datenverbindung umfasst, und welche nicht die Nachteile des Standes der Technik aufweist.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass eine Netzzugangsvorrichtung für drahtlose Kommunikationsendgeräte einen Access Point mit mehreren durch eine Netzwerkidentifizierung identifizierbaren funkbasierten drahtlosen Lokalnetzen umfasst, wobei der Access Point über mindestens eine Datenverbindung mit weiteren Netzwerkgeräten oder Netzwerken verbindbar ist, wobei mittels eines Verbindungs-Kontrollmoduls eine erste über die mindestens eine Datenverbindung geführte Tunnel-Verbindung zur Übertragung von Daten eines ersten drahtlosen Netzwerks konfigurierbar ist, wobei basierend auf der Netzwerkidentifizierung des ersten drahtlosen Netzwerks mindestens einem Funktionsparameter der ersten Tunnel-Verbindung ein bestimmbarer Parameterwert zuweisbar ist, wobei mittels eines Verbindungs-Kontrollmoduls eine zweite über die mindestens eine Datenverbindung geführte Tunnel-Verbindung zur Übertragung von Daten eines zweiten drahtlosen Netzwerks konfigurierbar ist, und wobei basierend auf der Netzwerkidentifizierung des zweiten drahtlosen Netzwerks mindestens einem Funktionsparameter der zweiten Tunnel-Verbindung ein bestimmbarer Parameterwert zuweisbar ist. Dadurch, dass Daten von drahtlosen Lokalnetzen entsprechend einer Netzwerkidentifizierung über entsprechende Tunnel-Verbindungen übertragen werden ist es möglich, den Zugang zum Access Point der Netzzugangsvorrichtung beispielsweise für private Teilnehmer und für öffentliche Benutzer auf verschiedene drahtlose Lokalnetze zu begrenzen. Da für die verschiedenen Tunnel-Verbindungen durch das Verbindungs-Kontrollmodul unterschiedliche Funktionsparameter definiert und aufgesetzt werden können, ist es entsprechend auch möglich, für private Teilnehmer und für öffentliche Benutzer unterschiedliche Zugangsbedingungen zu definieren. Dabei kann das Verbindungs-Kontrollmodul an irgendeiner geeigneten Stelle angeordnet sein, beispielsweise in der Netzzugangsvorrichtung oder in irgendeinem anderen mit der Netzzugangsvorrichtung verbindbaren Netzwerkgerät. Dadurch, dass die Datenströme von Kommunikationsendgeräten privater Teilnehmer und die Datenströme von Kommunikationsendgeräten öffentlicher Benutzer über verschiedene Tunnel-Verbindungen über die mindestens eine Datenverbindung zwischen dem Access Point und weiteren Netzwerkgeräten oder Netzwerken übertragen werden, können Datenströme privater Teilnehmer und Datenströme öffentlicher Teilnehmer logisch voneinander getrennt werden, wobei den verschiedenen Tunnel-Verbindungen beispielsweise gezielt Bitraten, das heisst Übertragungskapazitäten, oder ein Endpunkt der Tunnel-Verbindung zugeordnet werden können, wobei beispielsweise den privaten Teilnehmern vom Betreiber der mindestens einen Datenverbindung Gutschriften für die Verwendung von Tunnel-Verbindungen durch öffentliche Benutzer gemacht werden können, und wobei beispielsweise eine Tunnel-Verbindung zu bestimmbaren Netzwerkgeräten oder Netzwerken, beispielsweise zu einem Netzwerkgerät zur Authentisierung oder Freischaltung eines Kommunikationsendgeräts, geführt werden kann. Die funkbasierten drahtlosen Lokalnetze sind vorzugsweise WLAN-Netze. Die Netzwerkidentifizierung zur Identifizierung der drahtlosen Lokalnetze ist beispielsweise ein so genannter Service Set Identifier (SSID). Daten der drahtlosen Lokalnetze umfassen beispielsweise IP-Datenpakete (Internet Protocol). Die erste und die zweite Tunnel-Verbindung sind beispielsweise so genannte PPP-Verbindungen (Point to Point Protocol), Layer 2 Tunneling Protocol (L2TP) Verbindungen oder irgendeine andere geeignete Tunnel-Verbindung.

In einer Ausführungsvariante ist mindestens ein Zustandsparameter einer Tunnel-Verbindung messbar und es ist mindestens einem Funktionsparameter einer Tunnel-Verbindung basierend auf dem mindestens einen Zustandsparameter der Tunnel-Verbindung ein Parameterwert zuweisbar. Dadurch ist es insbesondere möglich, dass beispielsweise einer zweiten Tunnel-Verbindung nur dann einen bestimmbaren Funktionsparameter zugewiesen wird, falls der Zustandsparameter einer ersten Tunnel-Verbindung bestimmbare Kriterien erfüllt.

In einer Ausführungsvariante ist der mindestens eine Funktionsparameter bzw. der mindestens eine Zustandsparameter die maximal zulässige Bitrate bzw. die aktuell belegte Bitrate einer Tunnel-Verbindung. Dadurch ist es insbesondere möglich, dass beispielsweise einer zweiten Tunnel-Verbindung eine auf der aktuell belegten Bitrate der ersten Tunnel-Verbindung basierende maximal zulässige Bitrate zugewiesen wird.

In einer Ausführungsvariante wird der zweiten Tunnel-Verbindung keine zulässige Bitrate zugeteilt solange die aktuelle Bitrate der ersten Tunnel-Verbindung eine bestimmbare Bitrate überschreitet. Dadurch ist es insbesondere möglich, dass die Bitrate der mindestens einen Datenverbindung zwischen dem Access Point und weiteren Netzwerkgeräten oder Netzwerken bevorzugt dem der ersten Tunnel-Verbindung zugeordneten ersten Lokalnetz zur Verfügung gestellt wird.

In einer Ausführungsvariante steht die zulässige Bitrate der ersten Tunnel-Verbindung zur zulässigen Bitrate der zweiten Tunnel-Verbindung in einem definierbaren Verhältnis. Dadurch ist es insbesondere möglich, dass dem ersten Lokalnetz bzw. dem zweiten Lokalnetz definierbare Anteile der Bitrate der mindestens einen Datenverbindung zwischen dem Access Point und weiteren Netzwerkgeräten oder Netzwerken zugeteilt werden können.

In einer Ausführungsvariante wird mindestens ein Kommunikationsendgerät auf der Grundlage von kryptographischer Verfahren authentifiziert. Die kryptographischen Verfahren für die Kontrolle von Kommunikationsendgeräten können beispielsweise für Kommunikationsendgeräte des ersten drahtlosen Lokalnetzes direkt in der Netzzugangsvorrichtung und für Kommunikationsendgeräte des zweiten drahtlosen Lokalnetzes in einer dem Betreiber der mindestens einen Datenleitung zwischen dem Access Point und weiteren Netzwerkgeräten oder Netzwerken zugeordneten System erfolgen. Beispielsweise kann einem Kommunikationsendgerät der Zugang verwehrt werden, wenn es nicht über einen bestimmten kryptographischen Schlüssel verfügt. Die Netzzugangsvorrichtung ist zum Beispiel eingerichtet, ein Netzwerkidentifizierung zu verschlüsseln und die verschlüsselte Netzwerkidentifizierung des ersten drahtlosen Lokalnetzes an ein erstes Kommunikationsendgerät des ersten drahtlosen Lokalnetzes zu übermitteln. Andererseits kann die Authentifizierung eines Kommunikationsendgeräts des zweiten drahtlosen Lokalnetzes in eine Netzwerkeinheit eines Netzbetreibers ausgelagert werden, an welche eine diesbezügliche Zugangsanfrage von der Netzzugangsvorrichtung weitergeleitet wird. Die Netzzugangsvorrichtung ist zum Beispiel eingerichtet zwischen dem Kommunikationsendgerät des zweiten drahtlosen Lokalnetzes und einem bei einem Netzbetreiber angeordneten Netzwerkserver Identifizierungsinformationen via das zweite drahtlose Lokalnetz und beispielsweise via die zweite Tunnel-Verbindung auszutauschen. Mit anderen Worten, die Authentifizierung von Kommunikationsendgeräten des ersten drahtlosen Lokalnetzes kann direkt in der Netzzugangsvorrichtung erfolgen während die Authentifizierung von Kommunikationsendgeräten des zweiten Lokalnetzes in einem Netzwerkserver des Netzbetreibers erfolgen kann.

In einer Ausführungsvariante ist mindestens einem Funktionsparameter der mindestens einen Datenverbindung zwischen dem Access Point und einem weiteren Netzwerkgerät oder Netzwerk ein definierbarer Parameterwert zuweisbar. Beispielsweise ist dieser Parameterwert die Bitrate der Datenverbindung. Dadurch ist es beispielsweise möglich, dass gleichzeitig mit der Konfiguration einer zweiten Tunnel-Verbindung einer bestimmbaren maximal zulässigen Bitrate die Bitrate der Datenverbindung entsprechend erhöht wird und so gleichzeitig eine bestimmbare Bitrate der ersten Tunnel-Verbindung gewährleistet bleibt.

Nachfolgend wird eine Ausführung der vorliegenden Erfindung anhand eines Beispiels beschrieben. Das Beispiel der Ausführung wird durch die einzige beigelegte Figur illustriert:

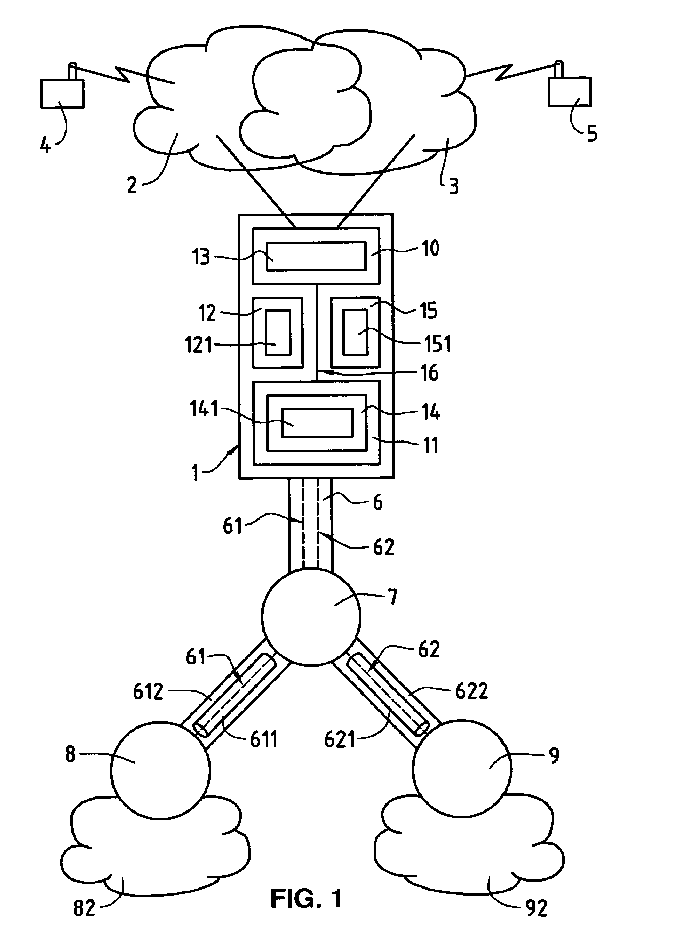

Figur 1 zeigt ein Blockdiagramm, welches schematisch eine Netzzugangsvorrichtung darstellt, welche ein Kommunikationsendgerät eines ersten drahtlosen Lokalnetzes, beispielsweise das Kommunikationsendgerät eines privaten Teilnehmers und ein Kommunikationsendgerät eines öffentlichen Benutzers über eine Teilnehmerleitung mit mehreren Netzwerkservern verbindet.

In der Figur 1 bezeichnet das Bezugszeichen 1 eine Netzzugangsvorrichtung. Wie in der Figur 1 dargestellt ist, umfasst die Netzzugangsvorrichtung 1 einen Access Point 10 für funkbasierte drahtlose Lokalnetze 2, 3, ein Modem 11 für die Kommunikation über eine Teilnehmerleitung 6, ein Schaltermodul 12 sowie ein Verbindungsabbildungsmodul 15. Vorzugsweise sind der Access Point 10 und das Modem 11 in einer Vorrichtung mit einem gemeinsamen Gehäuse angeordnet, der Fachmann wird jedoch verstehen, dass der Access Point 10 und das Modem 11 auch in verschiedenen Gehäusen angeordnet sein können. Wie in der Figur 1 schematisch dargestellt ist, sind der Access Point 10 und das Modem 11 miteinander über eine Datenkommunikationsschnittstelle 16 verbunden. Die Datenkommunikationsschnittstelle 16 umfasst beispielsweise eine Ethernet-Verbindung und ist für den Austausch von IP-Datenpaketen eingerichtet. Der Access Point 10 ist beispielsweise ein so genannter Access Point für funkbasierte drahtlose Lokalnetze 2, 3 gemäss der Normenfamilie IEEE 802.11. Der Access Point 10 ist eingerichtet, mehrere drahtlose Lokalnetze 2, 3 auf Grund von verschiedenen Netzwerkidentifizierungen zu unterscheiden und zu identifizieren, beispielsweise auf Grund von SSID-Kennzeichnungen (Service Set Identifier), die von den Kommunikationsendgeräten 4, 5 an den Access Point 10 übermittelt werden. Im vorliegenden Beispiel ist das drahtlose Lokalnetz 2 privaten Teilnehmern im Heimbereich der Netzzugangsvorrichtung 1 vorbehalten, das heisst ein privater Teilnehmer hat mit seinem Kommunikationsendgerät 4 über das (private) drahtlose Lokalnetz 2 Zugang auf den Access Point 10. Das drahtlose Lokalnetz 3 hingegen ist im vorliegenden Beispiel öffentlichen Benutzern im öffentlichen Raum vorbehalten, das heisst, ein öffentlicher mobiler Benutzer hat mit seinem mobilen Kommunikationsendgerät 5 über das (öffentliche) drahtlose Lokalnetz 3 Zugang auf den Access Point 10. Das Modem 11 ist beispielsweise ein ADSL-Modem (Asymmetric Digital Subscriber Line) für die Kommunikation über eine ADSL-Teilnehmerleitung.

Wie in der Figur 1 dargestellt ist, ist die Netzzugangsvorrichtung 1 mittels des Modems 11 über die Teilnehmerleitung 6 mit dem Zugangskonzentrator 7 verbunden. Der Zugangskonzentrator 7 ist jeweils über IP-Verbindungen 612, 622 mit den Netzwerkservern 8, 9 verbunden. Der Zugangskonzentrator 7 ist beispielsweise ein so genannter L2TP Access Concentrator (LAC) und die Netzwerkserver 8, 9 sind L2TP Network Server (LNS), die typischerweise bei einem Dienstanbieter für den Zugang auf ein Festnetz 82, 92 angeordnet sind, vorzugsweise bei einem Internet-Dienstanbieter für den Zugang auf das Internet. Zwischen einem L2TP Access Concentrator und einem L2TP Network Server wird jeweils basierend auf dem so genannten Layer Two Tunneling Protocol (L2TP) eine L2TP-Tunnel-Verbindung 611, 621 für die Übertragung von PPP-Meldungen (Point-to-Point Protocol) erstellt.

Der Access Point 10 umfasst ein Zugangskontrollmodul 13, das eingerichtet ist, die Netzwerkidentifizierung des privaten drahtlosen Lokalnetzes 2 mit einem kryptographischen Schlüssel zu verschlüsseln und die verschlüsselte Netzwerkidentifizierung rundfunkmässig auszustrahlen. Das Zugangskontrollmodul 13 ist vorzugsweise als programmiertes Softwaremodul zur Steuerung eines Prozessors des Access Points 10 ausgeführt. Der Fachmann wird jedoch verstehen, dass das Zugangskontrollmodul 13 auch teilweise oder vollständig hardwaremässig ausgeführt werden kann.

Das Kommunikationsendgerät 4 des privaten Teilnehmers umfasst einen gespeicherten kryptographischen Schlüssel zur Entschlüsslung der verschlüsselten Netzwerkidentifizierung des privaten drahtlosen Lokalnetzes 2 und kann sich mit der entschlüsselten Netzwerkidentifizierung beim Access Point 10 mit dem privaten drahtlosen Lokalnetz 2 assoziieren.

Das Schaltermodul 12 der Netzzugangsvorrichtung 1 ist eingerichtet zum Setzen eines im Zustandsspeicher 121 gespeicherten Zustandswerts. Der Zustandswert kann einen offenen Zustand oder einen geschlossenen Zustand annehmen. Das Schaltermodul 12 der Netzzugangsvorrichtung 1 ist so eingerichtet, dass der Zustandswert beispielsweise über eine Benutzerschnittstelle der Netzzugangsvorrichtung 1 durch den privaten Teilnehmer gesetzt werden kann. Im offenen Zustand gewährt das Zugangskontrollmodul 13 dem Kommunikationsendgerät 4 des privaten Teilnehmers Zugang über das private drahtlose Lokalnetz 2, und dem mobilen Kommunikationsendgerät 5 des öffentlichen Benutzers Zugang über das öffentliche drahtlose Lokalnetz 3. Im geschlossenen Zustand gewährt das Zugangskontrollmodul 13 nur dem Kommunikationsendgerät 4 des privaten Teilnehmers den Zugang, aber verwehrt dem mobilen Kommunikationsendgerät 5 des öffentlichen Benutzers den Zugang. Das Schaltermodul 12 ist vorzugsweise als programmiertes Softwaremodul zur Steuerung eines Prozessors der Netzzugangsvorrichtung 1 ausgeführt. Der Fachmann wird jedoch verstehen, dass das Schaltermodul 12 auch teilweise oder vollständig hardwaremässig ausgeführt werden kann, insbesondere kann die Benutzerschnittstelle in Form eines mechanischen oder elektronischen Schalters ausgeführt sein.

Die Netzzugangsvorrichtung 1 umfasst ein Verbindungs-Kontrollmodul 15, das eingerichtet ist, Kommunikationsendgeräte 4, 5, die mit einem drahtlosen Lokalnetz 2, 3 assoziiert sind, auf Punkt-zu-Punkt-Verbindungen 61, 62 über die Teilnehmerleitung 6 sowie über die IP-Verbindungen 612, 622 abzubilden. Die Punkt-zu-Punkt-Verbindungen 61, 62 sind PPP-Verbindungen (Point-to-Point Protocol) vom Modem 11 über den Zugangskonzentrator 7 zu den Netzwerkservern 8, 9, wobei PPP-Meldungen, wie oben bereits erwähnt, in L2TP-Tunnels 611, 621 vom Zugangskonzentrator 7 an die Netzwerkserver 8, 9 weitergeleitet werden. Das Verbindungs-Kontrollmodul 15 erstellt bis zu einer maximalen Teilnehmerzahl, respektive bis zu einer maximal verfügbaren Bitrate der Teilnehmerleitung 6 für das Kommunikationsendgerät 4, von jedem aktiven privaten Teilnehmer des privaten drahtlosen Lokalnetzes 2 jeweils eine PPP-Verbindung 61. Das Verbindungs-Kontrollmodul 15 erstellt zudem für das öffentliche drahtlose Lokalnetz 3 eine weitere PPP-Verbindung 62, die für den Datenverkehr sämtlicher öffentlicher Benutzer des öffentlichen drahtlosen Lokalnetzes 3 zur Verfügung steht. In der Verbindungs-Kontrolltabelle 151 werden Endgeräteadressen, beispielsweise so genannte MAC-Adressen (Medium Access Control), und/oder IP-Adressen der Kommunikationsendgeräte 4, 5 den Netzwerkidentifizierungen der zugehörigen drahtlosen Lokalnetze 2, 3 und Verbindungsidentifizierungen der betreffenden PPP-Verbindungen 61, 62 einander zugeordnet gespeichert, wie in der Tabelle 1 unter Verwendung der Bezugszeichen der Figur 1 als Identifizierungselemente beispielhaft illustriert ist.

**Tabelle 1**

| Kommunikationsendgerät (MAC-Adresse und/oder IP-Adresse) | Drahtloses Lokalnetz (Netzwerkidentifizierung, z.B. SSID) | PPP-Verbindung (Verbindungsreferenz) |
|---|---|---|
| 4 (z. B. 10.10.1.x) | 2 | 61 |
| 10.10.2.x | 2 | YY |
| 5 (z.B. 10.10.3.x) | 3 | 62 |
| 10.10.4.x | 3 | 62 |

Wie aus der Tabelle 1 ersichtlich ist, wird für das Kommunikationsendgerät 4 des privaten Teilnehmers, das beispielsweise die IP-Adresse 10.10.1.x aufweist, und für ein weiteres Kommunikationsendgerät des privaten Teilnehmers, das beispielsweise die IP-Adresse 10.10.2.x aufweist, jeweils eine separate PPP-Verbindung 61, respektive YY (in der Figur 1 nicht dargestellt) erstellt. Hingegen wird für das Kommunikationsendgerät 5 des öffentlichen Benutzers, das beispielsweise die IP-Adresse 10.10.3.x aufweist, und für ein weiteres Kommunikationsendgerät eines öffentlichen Benutzers, das beispielsweise die IP-Adresse 10.10.4.x aufweist, nur eine gemeinsame PPP-Verbindung 62 erstellt.

Die Netzzugangsvorrichtung 1 umfasst ein Bitraten-Kontrollmodul 14, das eingerichtet ist, die verfügbare Bitrate der Teilnehmerleitung 6 bis zu einer definierten maximalen verfügbaren Bitrate zu erhöhen, wenn eine zusätzliche PPP-Verbindung 61, 62 erstellt wird. Im Datenspeicher 141 werden Angaben über den Betrag der momentan total zugewiesenen Bitrate gespeichert, dies kann beispielsweise in Form von Frequenzbandbreite oder Anzahl erstellter PPP-Verbindungen 61, 62 ausgeführt werden. Zur Erhöhung der so genannten Down-Link-Bitrate vom Zugangskonzentrator 7 zum Modem 11 übermittelt das Bitraten-Kontrollmodul 14 eine entsprechende Anfrage an den Zugangskonzentrator 7. Das Zugangskontrollmodul 13 ist beispielsweise eingerichtet, den mobilen Kommunikationsendgeräten 5 der öffentlichen Benutzer den Zugang zu verwehren, wenn die Bitrate, die der Teilnehmerleitung 6 gemäss dem Datenspeicher 141 insgesamt zugewiesen ist, bereits der definierten maximalen verfügbaren Bitrate entspricht und somit für die öffentlichen Benutzer keine PPP-Verbindung 62 über die Teilnehmerleitung 6 erstellt werden kann. Die maximal verfügbare Bitrate der Teilnehmerleitung 6 beträgt zum Beispiel 2 Mbps oder 8 Mbps und jeder zusätzlichen PPP-Verbindung werden beispielsweise 256 Kbps respektive 2 Mbps zugewiesen.

Das Kommunikationsendgerät 5 des öffentlichen Benutzers umfasst eine gespeicherte Netzwerkidentifizierung des öffentlichen drahtlosen Lokalnetzes 3. Auf Grund der Netzwerkidentifizierung des öffentlichen drahtlosen Lokalnetzes 3, die vom Kommunikationsendgerät 5 an der Access Point 10 übermittelt wird, wird das Kommunikationsendgerät 5 des öffentlichen Benutzers bei der Zugangspunkteinheit 10 mit dem öffentlichen drahtlosen Lokalnetz 3 assoziiert, falls das Zugangskontrollmodul 13 dem Kommunikationsendgerät 5 den Zugang nicht verwehrt, weil festgestellt wird, dass der im Zustandsspeicher 121 gespeicherte Zustandswert einen geschlossenen Zustand anzeigt, oder falls für das öffentliche drahtlose Lokalnetz 3 gemäss der Verbindungs-Kontrolltabelle 151 noch keine PPP-Verbindung 62 erstellt worden ist und die gemäss dem Datenspeicher 141 insgesamt zugewiesene Bitrate bereits der definierten maximalen verfügbaren Bitrate entspricht. Wenn das Kommunikationsendgerät 5 mit dem öffentlichen drahtlosen Lokalnetz 3 assoziiert ist, wird die Authentifizierung und Zugangskontrolle zwischen dem Kommunikationsendgerät 5 und dem zuständigen Netzwerkserver 8, 9 über die Netzzugangsvorrichtung 1 und über den Zugangskonzentrator 7 abgewickelt, beispielsweise gemäss der Norm IEEE 802.1x. Das heisst, das Zugangskontrollmodul 13 ist eingerichtet, Identifizierungs- und/oder Authentifizierungsinformationen vom Kommunikationsendgerät 5 des öffentlichen Teilnehmers über das öffentliche drahtlose Lokalnetz 3 entgegenzunehmen und über die Teilnehmerleitung 6 an den zuständigen Netzwerkserver 8, 9 weiterzuleiten. Die Identifizierungsund/oder Authentifizierungsinformationen umfassen beispielsweise einen Benutzernamen sowie ein Benutzerpasswort oder einen Zugangscode.

## Patentansprüche

1. Netzzugangsvorrichtung für drahtlose Kommunikationsendgeräte (4,5), umfassend einen Access Point (10), wobei der Access Point (10) eingerichtet ist, um mehrere funkbasierte drahtlose Lokalnetze (2,3) durch eine Netzwerkidentifizierung zu identifizieren, und wobei der Access Point (10) eingerichtet ist, um den Access Point (10) über mindestens eine Datenverbindung (6) mit weiteren Netzwerkgeräten oder Netzwerken zu verbinden, **dadurch gekennzeichnet,**
**dass** ein Verbindungs-Kontrollmodul (15) eingerichtet ist, um eine erste über die mindestens eine Datenverbindung (6) geführte Tunnel-Verbindung (61) zur Übertragung von Daten eines ersten drahtlosen Lokalnetzes (2) zu konfigurieren, wobei basierend auf der Netzwerkidentifizierung des ersten drahtlosen Netzwerks (2) mindestens einem Funktionsparameter der ersten Tunnel-Verbindung (61) ein bestimmter Funktionsparameterwert zugewiesen ist, und
**dass** das Verbindungs-Kontrollmodul (15) eingereichtet ist, um eine zweite über die mindestens eine Datenverbindung (6) geführte Tunnel-Verbindung (62) zur Übertragung von Daten eines zweiten drahtlosen Lokalnetzes (3) zu konfigurieren, wobei basierend auf der Netzwerkidentifizierung des zweiten drahtlosen Netzwerks (3) mindestens einem Funktionsparameter der zweiten Tunnel-Verbindung (62) ein bestimmter Funktionsparameterwert zugewiesen ist.

2. Netzzugangsvorrichtung nach Anspruch 1, **dadurch gekennzeichnet, dass** durch den mindestens einen Funktionsparameter die Bitrate einer Tunnel-Verbindung (61,62) bestimmt ist.

3. Netzzugangsvorrichtung nach einem der Ansprüche 1 bis 2, **dadurch gekennzeichnet, dass** durch den mindestens einen Funktionsparameter mindestens ein Endpunkt einer Tunnel-Verbindung (61,62) bestimmt ist.

4. Netzzugangsvorrichtung nach einem der Ansprüche 1 bis 3, **dadurch gekennzeichnet, dass** Mittel vorgesehen sind, um mindestens einen Zustandsparameter einer Tunnel-Verbindung (61,62) zu messen und dass Mittel vorgesehen sind, um mindestens einem Funktionsparameter einer Tunnel-Verbindung (61,62) basierend auf dem mindestens einen Zustands-parameter der Tunnel-Verbindung einen Parameterwert zuzuweisen.

5. Netzzugangsvorrichtung nach Anspruch 4, **dadurch gekennzeichnet, dass** der mindestens eine Funktionsparameter bzw. der mindestens eine Zustandsparameter die maximal zulässige Bitrate bzw. die aktuell belegte Bitrate einer Tunnel-Verbindung (61,62) umfasst.

6. Netzzugangsvorrichtung nach Anspruch 5, **dadurch gekennzeichnet, dass** der zweiten Tunnel-Verbindung (62) keine zulässige Bitrate - zugewiesen ist, falls die aktuell belegte Bitrate der ersten Tunnel-Verbindung (61) eine bestimmbare Bitrate überschreitet.

7. Netzzugangsvorrichtung nach Anspruch 5, **dadurch gekennzeichnet, dass** die zulässige Bitrate der ersten Tunnel-Verbindung (61) zur zulässigen Bitrate der zweiten Tunnel-Verbindung (62) ein definiertes Verhältnis bilden.

8. Netzzugangsvorrichtung nach einem der Ansprüche 1 bis 7, **dadurch gekennzeichnet, dass** mindestens ein Kommunikationsendgerät (4,5) auf der Grundlage von kryptographischer Verfahren authentifiziert ist.

9. Netzzugangsvorrichtung nach einem der Ansprüche 1 bis 8, **dadurch gekennzeichnet, dass** mindestens ein drahtloses Lokalnetz (2,3) durch eine Netzwerkidentifizierung auf der Grundlage von kryptographischer Verfahren identifiziert ist.

10. Netzzugangsvorrichtung nach einem der Ansprüche 1 bis 9, **dadurch gekennzeichnet, dass** mindestens einem Funktionsparameter der mindestens einen Datenverbindung (6) zwischen dem Access Point (10) und einem weiteren Netzwerkgerät oder Netzwerk ein definierter Parameterwert zugewiesen ist.

## Claims

1. Network access device for wireless communications terminals (4, 5), comprising an access point (10), being configured to identify a plurality of radio-based wireless local networks (2, 3) through a network identification, and the access point (10) being set up to connect the access point (10) via at least one data connection (6) to further network devices or networks, **characterised**
**in that** a connection control module (15) is set up to configure a first tunnel connection (61) conducted via the at least one data connection (6) for transmission of data of a first wireless local network (2), a particular function parameter value being assigned to at least one function parameter of the first tunnel connection (61) based on the network identification of the first wireless network (2), and
**in that** the connection control module (15) is set up to configure a second tunnel connection (62) conducted via the at least one data connection (6) for transmission of data of a second wireless local network (3), a particular function parameter value being assigned to at least one function parameter of the second tunnel connection (62) based on the network identification of the second wireless network (3).

2. Network access device according to claim 1, **characterised in that** the bit rate of a tunnel connection (61, 62) is determined by the at least one function parameter.

3. Network access device according to one of the claims 1 to 2, **characterised in that** at least one end point of a tunnel connection (61, 62) is determined by at least one function parameter.

4. Network access device according to one of the claims 1 to 3, **characterised in that** means are provided to measure at least one condition parameter of a tunnel connection (61, 62), and **in that** means are provided to assign a parameter value to at least one function parameter of a tunnel connection (61, 62) based on the at least one condition parameter of the tunnel connection.

5. Network access device according to claim 4, **characterised in that** the at least one function parameter or respectively the at least one condition parameter comprises the maximally permissible bit rate or respectively the currently occupied bit rate of a tunnel connection (61, 62).

6. Network access device according to claim 5, **characterised in that** no permissible bit rate is assigned to the second tunnel connection (62) if the currently occupied bit rate of the first tunnel connection (61) surpasses a definable bit rate.

7. Network access device according to claim 5, **characterised in that** the permissible bit rate of the first tunnel connection (61) forms a defined ratio to the permissible bit rate of the second tunnel connection (62)

8. Network access device according to one of the claims 1 to 7, **characterised in that** at least one communication terminal (4, 5) is authenticated on the basis of cryptographic methods.

9. Network access device according to one of the claims 1 to 8, **characterised in that** at least one wireless local network (2, 3) is identified by a network identification on the basis of cryptographic methods.

10. Network access device according to one of the claims 1 to 9, **characterised in that** a defined parameter value is assigned to at least one function parameter of the at least one data connection (6) between the access point (10) and a further network device or network.

## Revendications

1. Dispositif d'accès réseaux pour terminaux de communication sans fil (4,5) comprenant un Access Point (point d'accès) (10), l'Access Point (10) étant programmé pour identifier plusieurs réseaux locaux radio sans fil (2, 3) par une identification de réseau, et l'Access Point (10) étant programmé pour relier l'Access Point (10) par au moins une connexion de données (6) à d'autres appareils réseaux ou réseaux, **caractérisé**
**en ce qu'**un module de contrôle de connexion (15) est programmé pour configurer une première connexion tunnel (61) acheminée par au moins une connexion de données (6) pour la transmission de données d'un premier réseau local sans fil (2), en se basant sur l'identification de réseau du premier réseau sans fil (2), au moins un paramètre de fonction de la première connexion de tunnel (61) pouvant être attribué à une valeur définie de paramètre de fonction, et
**en ce que** le module de contrôle de connexion (15) est programmé pour configurer une seconde connexion de tunnel (62) acheminée par au moins une connexion de données (6) pour la transmission de données d'un second réseau local sans fil (3), en se basant sur l'identification de réseau du second réseau sans fil (3) au moins un paramètre de fonction de la seconde connexion de tunnel (62) pouvant être attribué à une valeur définie de paramètre de fonction.

2. Dispositif d'accès réseau selon la revendication 1, **caractérisé en ce que** le débit binaire d'une connexion de tunnel (61, 62) est déterminé par au moins un paramètre de fonction.

3. Dispositif d'accès réseau selon l'une des revendications 1 à 2, **caractérisé en ce qu'**au moins une extrémité d'une connexion de tunnel (61, 62) est déterminée par au moins un paramètre de fonction.

4. Dispositif d'accès réseau selon l'une des revendications 1 à 2, **caractérisé en ce qu'**il est prévu des moyens pour mesurer au moins un paramètre d'état d'une connexion de tunnel (61, 62) et **en ce que** des moyens sont prévus pour attribuer une valeur de paramètre à au moins un paramètre de fonction d'une connexion de tunnel (61, 62) basée sur au moins un paramètre d'état de la connexion de tunnel.

5. Dispositif d'accès réseau selon la revendication 4, **caractérisé en ce que** qu'au moins un paramètre de fonction respectivement au moins un paramètre d'état comprend le débit binaire maximal admissible respectivement le débit binaire en cours d'une connexion de tunnel (61, 62).

6. Dispositif d'accès réseau selon la revendication 5, **caractérisé en ce que** la seconde connexion de tunnel (62) n'est attribuée à aucun débit binaire admissible si le débit binaire en cours de la première connexion de tunnel (61) a dépassé un débit binaire déterminable.

7. Dispositif d'accès réseau selon la revendication 5, **caractérisé en ce que** le débit binaire admissible de la première connexion de tunnel (61) forme par rapport au débit binaire admissible de la seconde connexion de tunnel (62) un rapport défini.

8. Dispositif d'accès réseau selon l'une des revendications 1 à 7, **caractérisé en ce qu'**au moins un terminal de communication (4, 5) est authentifié sur la base d'un procédé cryptographique.

9. Dispositif d'accès réseau selon l'une des revendications 1 à 8, **caractérisé en ce qu'**au moins un réseau local sans fil (2, 3) est identifié par une identification de réseau sur la base d'un procédé cryptographique.

10. Dispositif d'accès réseau selon l'une des revendications 1 à 9, **caractérisé en ce qu'**au moins une valeur de paramètre définie est attribuée à au moins un paramètre de fonction d'au moins une connexion de données (6) entre l'Access Point (10) et un autre appareil de réseau ou réseau.
